# EUROPEAN PATENT APPLICATION

(11) **EP 4 290 963 A1**
(43) Date of publication of application: **13.12.2023**
(21) Application number: 22749955.5
(22) Date of filing: 27.01.2022
(51) Int. Cl.: H04W 72/12, H04W 72/04, H04W 52/02, H04W 76/28, H04W 4/06, H04W 92/18

(54) **SL DRX-BASED OPERATION METHOD FOR SIDELINK COMMUNICATION**

(30) Priority: 03.02.2021 KR 20210015742
(71) Applicant: HYUNDAI MOTOR COMPANY, Seoul 06797 (KR); Kia Corporation, Seocho-gu Seoul 06797 (KR); WONKWANG UNIVERSITY CENTER FOR INDUSTRY-ACADEMY COOPERATION, Iksan-si, Jeollabuk-do 54538 (KR)
(72) Inventor: HAHN, Gene Back, Hwaseong-si, Gyeonggi-do 18280 (KR); HONG, Ui Hyun, Hwaseong-si, Gyeonggi-do 18280 (KR); SON, Hyuk Min, Iksan-si, Jeollabuk-do 54653 (KR)
(74) Representative: Viering, Jentschura & Partner mbB Patent- und Rechtsanwälte
(86) International application number: PCT/KR2022/001517
(87) International publication number: WO 2022/169205

(57) **Abstract**

Disclosed is an SL DRX-based operation method for sidelink communication. An operation method of a transmission terminal comprises the steps of: receiving information instructing a Uu DRX cycle from a base station; receiving, from the base station, information on the mapping relationship between the Uu DRX cycle and at least one SL DRX cycle; transmitting first instruction information based on the information on mapping relationships to a first reception terminal; performing a reception operation with respect to the base station on the basis of the Uu DRX cycles; and performing first SL communication with the first reception terminal in consideration of a first SL DRX cycle determined by the Uu DRX cycle and the first instruction information.

## Description

### [Technical Field]

The present disclosure relates to a sidelink communication technique, and more particularly, to a technique for communication based on sidelink discontinuous reception (SL DRX).

### [Background Art]

A fifth-generation (5G) communication system (e.g., New Radio (NR) communication system) which uses a frequency band higher than a frequency band of a fourth-generation (4G) communication system (e.g., Long Term Evolution (LTE) communication system or LTE-Advanced (LTE-A) communication system) as well as the frequency band of the 4G communication system has been considered for processing of wireless data. The 5G communication system can support Enhanced Mobile Broadband (eMBB) communications, Ultra-Reliable and Low-Latency communications (URLLC), massive Machine Type Communications (mMTC), and the like.

The 4G communication system and 5G communication system can support Vehicle-to-Everything (V2X) communications. The V2X communications supported in a cellular communication system, such as the 4G communication system, the 5G communication system, and the like, may be referred to as "Cellular-V2X (C-V2X) communications." The V2X communications (e.g., C-V2X communications) may include Vehicle-to-Vehicle (V2V) communications, Vehicle-to-Infrastructure (V2I) communications, Vehicle-to-Pedestrian (V2P) communication, Vehicle-to-Network (V2N) communication, and the like.

In the cellular communication systems, the V2X communications (e.g., C-V2X communications) may be performed based on sidelink communication technologies (e.g., Proximity-based Services (ProSe) communication technology, Device-to-Device (D2D) communication technology, or the like). For example, sidelink channels for vehicles participating in V2V communications can be established, and communications between the vehicles can be performed using the sidelink channels. Sidelink communication may be performed using configured grant (CG) resources. The CG resources may be periodically configured, and periodic data (e.g., periodic sidelink data) may be transmitted using the CG resources.

Meanwhile, resource allocation schemes in sidelink communication may be classified into a mode 1 and a mode 2. When the mode 1 is used, a base station may transmit configuration information (e.g., resource allocation information) for sidelink (SL) communication to a transmitting terminal through a Uu link. The transmitting terminal may receive the configuration information for SL communication from the base station. When the transmitting terminal operates in an idle mode on the Uu link between the base station and the transmitting terminal, this may affect a procedure for transmitting and receiving the configuration information for SL communication. Therefore, methods for efficiently operating a discontinuous reception (DRX) operation on the Uu link and a DRX operation on a sidelink are required. In addition, effective DRX-based communication methods and methods for reducing power consumption are required in a communication environment in which one Uu link and a plurality of sidelinks exist.

### [Disclosure]

### [Technical Problem]

The present disclosure is directed to providing a method and an apparatus for sidelink discontinuous reception (SL DRX) based communication.

### [Technical Solution]

An operation method of a transmitting terminal, according to a first exemplary embodiment of the present disclosure for achieving the above-described objective, may comprise: receiving, from a base station, information indicating a Uu discontinuous reception (DRX) cycle; receiving, from the base station, information on a mapping relationship between the Uu DRX cycle and one or more sidelink (SL) DRX cycles; transmitting, to a first receiving terminal, first indication information based on the information on the mapping relationship; performing a reception operation for the base station based on the Uu DRX cycle; and performing a first SL communication with the first receiving terminal in consideration of a first SL DRX cycle determined by the Uu DRX cycle and the first indication information, wherein the Uu DRX cycle is a DRX cycle set for a Uu link between the base station and the transmitting terminal, and the first SL DRX cycle is a DRX cycle set for a SL between the transmitting terminal and the first receiving terminal.

The information on the mapping relationship may include information of the first SL DRX cycle and a second SL DRX cycle which are mapped to the Uu DRX cycle, and the first indication information may indicate the first SL DRX cycle.

The information on the mapping relationship may include a first multiple and a second multiple with respect to the Uu DRX cycle, the first indication information may indicate the first multiple, the first SL DRX cycle may be determined by applying the first multiple to the Uu DRX cycle, and each of the first multiple and the second multiple may be a rational number.

The information on the mapping relationship may include a first offset and a second offset with respect to the Uu DRX cycle, the first indication information may indicate the first offset, and a start time of the first SL DRX cycle may be determined as a time after the first offset from a start time of the Uu DRX cycle.

The operation method may further comprise: transmitting, to a second receiving terminal, second indication information based on the information on the mapping relationship; and performing a second SL communication with the second receiving terminal in consideration of a second SL DRX cycle determined based on the Uu DRX cycle and the second indication information, wherein the second SL DRX cycle is set independently of the first SL DRX cycle.

The operation method may further comprising: receiving, from the base station, information of Uu DRX cycle candidates, wherein the Uu DRX cycle may be one of the Uu DRX cycle candidates.

An operation method of a receiving terminal, according to a second exemplary embodiment of the present disclosure for achieving the above-described objective, may comprise: receiving information indicating a Uu discontinuous reception (DRX) cycle; receiving, from a transmitting terminal, information on a mapping relationship between the Uu DRX cycle and a sidelink (SL) DRX cycle; identifying the SL DRX cycle based on the Uu DRX cycle and the information on the mapping relationship; and performing a reception operation for the receiving terminal based on the SL DRX cycle, wherein the Uu DRX cycle is a DRX cycle set for a Uu link between a base station and the transmitting terminal, and the SL DRX cycle is a DRX cycle set for a SL between the transmitting terminal and the receiving terminal.

The information on the mapping relationship may include information of the SL DRX cycle mapped to the Uu DRX cycle.

The information on the mapping relationship may include a multiple with respect to the Uu DRX cycle, the SL DRX cycle may be determined by applying the multiple to the Uu DRX cycle, and the multiple may be a rational number.

The information on the mapping relationship may include an offset with respect to the Uu DRX cycle, and a start time of the SL DRX cycle may be determined as a time after the offset from a start time of the Uu DRX cycle.

The operation method may further comprise: receiving, from the base station, information of Uu DRX cycle candidates, wherein the Uu DRX cycle may be one of the Uu DRX cycle candidates.

An operation method of a transmitting terminal, according to a third exemplary embodiment of the present disclosure for achieving the above-described objective, may comprise: determining a common discontinuous reception (DRX) cycle for broadcast communication; transmitting configuration information of the common DRX cycle to a first receiving terminal and a second receiving terminal; and performing the broadcast communication with the first receiving terminal and the second receiving terminal on a sidelink (SL) in consideration of the common DRX cycle.

The operation method may further comprise: transmitting, to the first receiving terminal, first indication information indicating a first user equipment (UE)-specific DRX cycle for the first receiving terminal; and transmitting, to the second receiving terminal, second indication information indicating a second UE-specific DRX cycle for the second receiving terminal.

The first indication information may be a first multiple with respect to the common DRX cycle, the first UE-specific DRX cycle may be determined by applying the first multiple to the common DRX cycle, the second indication information may be a second multiple with respect to the common DRX cycle, the second UE-specific DRX cycle may be determined by applying the second multiple to the common DRX cycle, and each of the first multiple and the second multiple may be a rational number.

The first indication information may be a first offset with respect to the common DRX cycle, a start time of the first UE-specific DRX cycle may be determined as a time after the first offset from a start time of the common DRX cycle, the second indication information may be a second offset with respect to the common DRX cycle, and a start time of the second UE-specific DRX cycle may be determined as a time after the second offset from the start time of the common DRX cycle.

When the first UE-specific DRX cycle and the second UE-specific DRX cycle are set for unicast communication, the first UE-specific DRX cycle and the second UE-specific DRX cycle may be set differently from each other, and when the first UE-specific DRX cycle and the second UE-specific DRX cycle are set for groupcast communication, the first UE-specific DRX cycle and the second UE-specific DRX cycle may be set identically to each other.

The common DRX cycle may be set cell-specifically, resource pool (RP)-specifically, or cast type (CT)-specifically.

The common DRX cycle may be determined as a common multiple between the first SL DRX cycle of the first receiving terminal and the second SL DRX cycle of the second receiving terminal.

### [Advantageous Effects]

According to the present disclosure, a SL DRX cycle may be set to be associated with (e.g., mapped to) a Uu DRX cycle. For example, a transmitting terminal may transmit information on a mapping relationship between the Uu DRX cycle and the SL DRX cycle to a receiving terminal, and the receiving terminal may identify the SL DRX cycle based on the information on the mapping relationship. In addition, the transmitting terminal may set a common DRX cycle for broadcast communication to receiving terminals. Therefore, DRX operations on a sidelink can be efficiently performed, power consumption in the terminals can be reduced, and performance of the communication system can be improved.

### [Description of Drawings]

FIG. 1 is a conceptual diagram illustrating V2X communication scenarios.
FIG. 2 is a conceptual diagram illustrating an exemplary embodiment of a cellular communication system.
FIG. 3 is a conceptual diagram illustrating an exemplary embodiment of a communication node constituting a cellular communication system.
FIG. 4 is a block diagram illustrating an exemplary embodiment of a user plane protocol stack of a UE performing sidelink communication.
FIG. 5 is a block diagram illustrating a first exemplary embodiment of a control plane protocol stack of a UE performing sidelink communication.
FIG. 6 is a block diagram illustrating a second exemplary embodiment of a control plane protocol stack of a UE performing sidelink communication.
FIG. 7 is a conceptual diagram illustrating a first exemplary embodiment of a communication system including a Uu link and a SL.
FIG. 8 is a conceptual diagram illustrating a first exemplary embodiment of a communication system including a plurality of SLs.
FIG. 9 is a timing diagram illustrating operations of terminals according to different SL DRX cycles.

### [Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In exemplary embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In exemplary embodiments of the present disclosure, '(re)transmission' may refer to `transmission', 'retransmission', or `transmission and retransmission', '(re)configuration' may refer to `configuration', `reconfiguration', or 'configuration and reconfiguration', `(re)connection' may refer to 'connection', 'reconnection', or 'connection and reconnection', and `(re)access' may refer to 'access', `re-access', or 'access and re-access'.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as `comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, forms of the present disclosure will be described in detail with reference to the accompanying drawings. In describing the disclosure, to facilitate the entire understanding of the disclosure, like numbers refer to like elements throughout the description of the figures and the repetitive description thereof will be omitted.

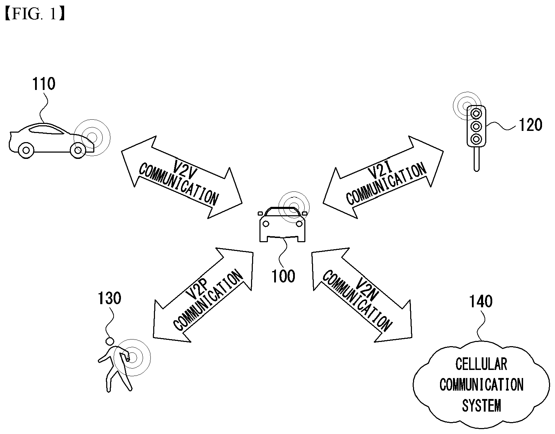

FIG. 1 is a conceptual diagram illustrating V2X communication scenarios.

As shown in FIG. 1, the V2X communications may include Vehicle-to-Vehicle (V2V) communications, Vehicle-to-Infrastructure (V2I) communications, Vehicle-to-Pedestrian (V2P) communications, Vehicle-to-Network (V2N) communications, and the like. The V2X communications may be supported by a cellular communication system (e.g., a cellular communication system 140), and the V2X communications supported by the cellular communication system 140 may be referred to as "Cellular-V2X (C-V2X) communications." Here, the cellular communication system 140 may include the 4G communication system (e.g., LTE communication system or LTE-A communication system), the 5G communication system (e.g., NR communication system), and the like.

The V2V communications may include communications between a first vehicle 100 (e.g., a communication node located in the vehicle 100) and a second vehicle 110 (e.g., a communication node located in the vehicle 110). Various driving information such as velocity, heading, time, position, and the like may be exchanged between the vehicles 100 and 110 through the V2V communications. For example, autonomous driving (e.g., platooning) may be supported based on the driving information exchanged through the V2V communications. The V2V communications supported in the cellular communication system 140 may be performed based on "sidelink" communication technologies (e.g., ProSe and D2D communication technologies, and the like). In this case, the communications between the vehicles 100 and 110 may be performed using at least one sidelink channel established between the vehicles 100 and 110.

The V2I communications may include communications between the first vehicle 100 (e.g., the communication node located in the vehicle 100) and an infrastructure (e.g., road side unit (RSU)) 120 located on a roadside. The infrastructure 120 may also include a traffic light or a street light which is located on the roadside. For example, when the V2I communications are performed, the communications may be performed between the communication node located in the first vehicle 100 and a communication node located in a traffic light. Traffic information, driving information, and the like may be exchanged between the first vehicle 100 and the infrastructure 120 through the V2I communications. The V2I communications supported in the cellular communication system 140 may also be performed based on sidelink communication technologies (e.g., ProSe and D2D communication technologies, and the like). In this case, the communications between the vehicle 100 and the infrastructure 120 may be performed using at least one sidelink channel established between the vehicle 100 and the infrastructure 120.

The V2P communications may include communications between the first vehicle 100 (e.g., the communication node located in the vehicle 100) and a person 130 (e.g., a communication node carried by the person 130). The driving information of the first vehicle 100 and movement information of the person 130 such as velocity, heading, time, position, and the like may be exchanged between the vehicle 100 and the person 130 through the V2P communications. The communication node located in the vehicle 100 or the communication node carried by the person 130 may generate an alarm indicating a danger by judging a dangerous situation based on the obtained driving information and movement information. The V2P communications supported in the cellular communication system 140 may be performed based on sidelink communication technologies (e.g., ProSe and D2D communication technologies, and the like). In this case, the communications between the communication node located in the vehicle 100 and the communication node carried by the person 130 may be performed using at least one sidelink channel established between the communication nodes.

The V2N communications may be communications between the first vehicle 100 (e.g., the communication node located in the vehicle 100) and a server connected through the cellular communication system 140. The V2N communications may be performed based on the 4G communication technology (e.g., LTE or LTE-A) or the 5G communication technology (e.g., NR). Also, the V2N communications may be performed based on a Wireless Access in Vehicular Environments (WAVE) communication technology or a Wireless Local Area Network (WLAN) communication technology which is defined in Institute of Electrical and Electronics Engineers (IEEE) 802.11, or a Wireless Personal Area Network (WPAN) communication technology defined in IEEE 802.15.

Meanwhile, the cellular communication system 140 supporting the V2X communications may be configured as follows.

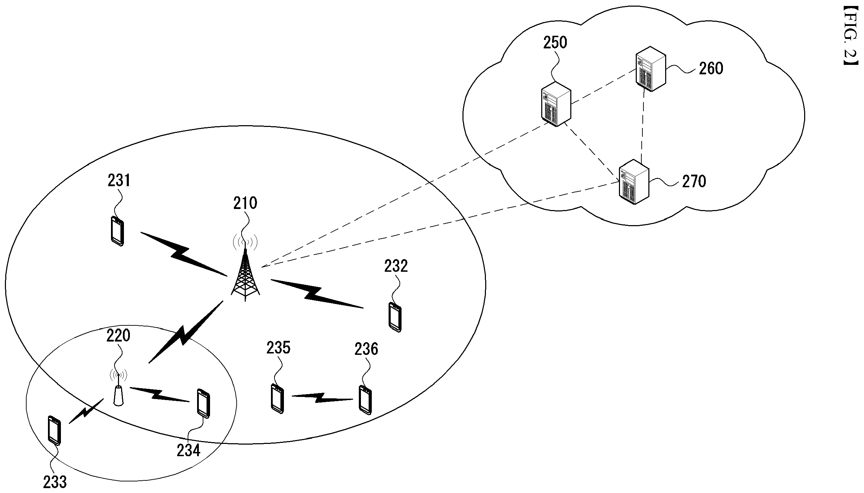

FIG. 2 is a conceptual diagram illustrating an exemplary embodiment of a cellular communication system.

As shown in FIG. 2, a cellular communication system may include an access network, a core network, and the like. The access network may include a base station 210, a relay 220, User Equipments (UEs) 231 through 236, and the like. The UEs 231 through 236 may include communication nodes located in the vehicles 100 and 110 of FIG. 1, the communication node located in the infrastructure 120 of FIG. 1, the communication node carried by the person 130 of FIG. 1, and the like. When the cellular communication system supports the 4G communication technology, the core network may include a serving gateway (S-GW) 250, a packet data network (PDN) gateway (P-GW) 260, a mobility management entity (MME) 270, and the like.

When the cellular communication system supports the 5G communication technology, the core network may include a user plane function (UPF) 250, a session management function (SMF) 260, an access and mobility management function (AMF) 270, and the like. Alternatively, when the cellular communication system operates in a Non-Stand Alone (NSA) mode, the core network constituted by the S-GW 250, the P-GW 260, and the MME 270 may support the 5G communication technology as well as the 4G communication technology, and the core network constituted by the UPF 250, the SMF 260, and the AMF 270 may support the 4G communication technology as well as the 5G communication technology.

In addition, when the cellular communication system supports a network slicing technique, the core network may be divided into a plurality of logical network slices. For example, a network slice supporting V2X communications (e.g., a V2V network slice, a V2I network slice, a V2P network slice, a V2N network slice, etc.) may be configured, and the V2X communications may be supported through the V2X network slice configured in the core network.

The communication nodes (e.g., base station, relay, UE, S-GW, P-GW, MME, UPF, SMF, AMF, etc.) comprising the cellular communication system may perform communications by using at least one communication technology among a code division multiple access (CDMA) technology, a time division multiple access (TDMA) technology, a frequency division multiple access (FDMA) technology, an orthogonal frequency division multiplexing (OFDM) technology, a filtered OFDM technology, an orthogonal frequency division multiple access (OFDMA) technology, a single carrier FDMA (SC-FDMA) technology, a non-orthogonal multiple access (NOMA) technology, a generalized frequency division multiplexing (GFDM) technology, a filter bank multi-carrier (FBMC) technology, a universal filtered multi-carrier (UFMC) technology, and a space division multiple access (SDMA) technology.

The communication nodes (e.g., base station, relay, UE, S-GW, P-GW, MME, UPF, SMF, AMF, etc.) comprising the cellular communication system may be configured as follows.

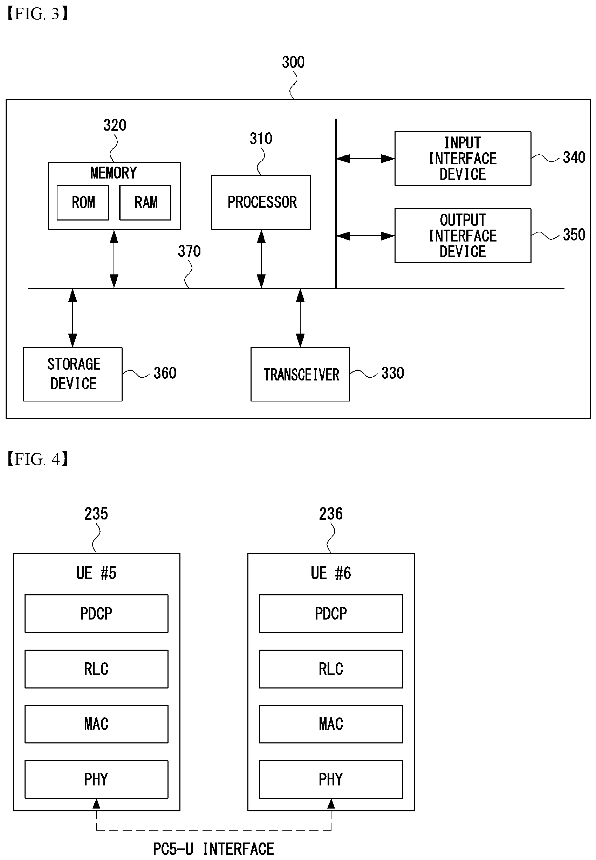

FIG. 3 is a conceptual diagram illustrating an exemplary embodiment of a communication node constituting a cellular communication system.

As shown in FIG. 3, a communication node 300 may comprise at least one processor 310, a memory 320, and a transceiver 330 connected to a network for performing communications. Also, the communication node 300 may further comprise an input interface device 340, an output interface device 350, a storage device 360, and the like. Each component included in the communication node 300 may communicate with each other as connected through a bus 370.

However, each of the components included in the communication node 300 may be connected to the processor 310 via a separate interface or a separate bus rather than the common bus 370. For example, the processor 310 may be connected to at least one of the memory 320, the transceiver 330, the input interface device 340, the output interface device 350, and the storage device 360 via a dedicated interface.

The processor 310 may execute at least one instruction stored in at least one of the memory 320 and the storage device 360. The processor 310 may refer to a central processing unit (CPU), a graphics processing unit (GPU), or a dedicated processor on which methods in accordance with embodiments of the present disclosure are performed. Each of the memory 320 and the storage device 360 may include at least one of a volatile storage medium and a non-volatile storage medium. For example, the memory 320 may comprise at least one of read-only memory (ROM) and random access memory (RAM).

Referring again to FIG. 2, in the communication system, the base station 210 may form a macro cell or a small cell, and may be connected to the core network via an ideal backhaul or a non-ideal backhaul. The base station 210 may transmit signals received from the core network to the UEs 231 through 236 and the relay 220, and may transmit signals received from the UEs 231 through 236 and the relay 220 to the core network. The UEs 231, 232, 234, 235 and 236 may belong to cell coverage of the base station 210. The UEs 231, 232, 234, 235 and 236 may be connected to the base station 210 by performing a connection establishment procedure with the base station 210. The UEs 231, 232, 234, 235 and 236 may communicate with the base station 210 after being connected to the base station 210.

The relay 220 may be connected to the base station 210 and may relay communications between the base station 210 and the UEs 233 and 234. That is, the relay 220 may transmit signals received from the base station 210 to the UEs 233 and 234, and may transmit signals received from the UEs 233 and 234 to the base station 210. The UE 234 may belong to both of the cell coverage of the base station 210 and the cell coverage of the relay 220, and the UE 233 may belong to the cell coverage of the relay 220. That is, the UE 233 may be located outside the cell coverage of the base station 210. The UEs 233 and 234 may be connected to the relay 220 by performing a connection establishment procedure with the relay 220. The UEs 233 and 234 may communicate with the relay 220 after being connected to the relay 220.

The base station 210 and the relay 220 may support multiple-input, multiple-output (MIMO) technologies (e.g., single user (SU)-MIMO, multi-user (MU)-MIMO, massive MIMO, etc.), coordinated multipoint (CoMP) communication technologies, carrier aggregation (CA) communication technologies, unlicensed band communication technologies (e.g., Licensed Assisted Access (LAA), enhanced LAA (eLAA), etc.), sidelink communication technologies (e.g., ProSe communication technology, D2D communication technology), or the like. The UEs 231, 232, 235 and 236 may perform operations corresponding to the base station 210 and operations supported by the base station 210. The UEs 233 and 234 may perform operations corresponding to the relays 220 and operations supported by the relays 220.

Here, the base station 210 may be referred to as a Node B (NB), an evolved Node B (eNB), a base transceiver station (BTS), a radio remote head (RRH), a transmission reception point (TRP), a radio unit (RU), a roadside unit (RSU), a radio transceiver, an access point, an access node, or the like. The relay 220 may be referred to as a small base station, a relay node, or the like. Each of the UEs 231 through 236 may be referred to as a terminal, an access terminal, a mobile terminal, a station, a subscriber station, a mobile station, a portable subscriber station, a node, a device, an on-broad unit (OBU), or the like.

Meanwhile, the communications between the UEs 235 and 236 may be performed based on the sidelink communication technique. The sidelink communications may be performed based on a one-to-one scheme or a one-to-many scheme. When V2V communications are performed using the sidelink communication technique, the UE 235 may be the communication node located in the first vehicle 100 of FIG. 1 and the UE 236 may be the communication node located in the second vehicle 110 of FIG. 1. When V2I communications are performed using the sidelink communication technique, the UE 235 may be the communication node located in first vehicle 100 of FIG. 1 and the UE 236 may be the communication node located in the infrastructure 120 of FIG. 1. When V2P communications are performed using the sidelink communication technique, the UE 235 may be the communication node located in first vehicle 100 of FIG. 1 and the UE 236 may be the communication node carried by the person 130 of FIG. 1.

The scenarios to which the sidelink communications are applied may be classified as shown below in Table 1 according to the positions of the UEs (e.g., the UEs 235 and 236) participating in the sidelink communications. For example, the scenario for the sidelink communications between the UEs 235 and 236 shown in FIG. 2 may be a sidelink communication scenario C.

**[Table 1]**

| **Sidelink Communication Scenario** | **Position of UE 235** | **Position of UE 236** |
|---|---|---|
| A | Out of coverage of base station 210 | Out of coverage of base station 210 |
| B | In coverage of base station 210 | Out of coverage of base station 210 |
| C | In coverage of base station 210 | In coverage of base station 210 |
| D | In coverage of base station 210 | In coverage of other base station |

Meanwhile, a user plane protocol stack of the UEs (e.g., the UEs 235 and 236) performing sidelink communications may be configured as follows.

FIG. 4 is a block diagram illustrating an exemplary embodiment of a user plane protocol stack of a UE performing sidelink communication.

As shown in FIG. 4, a left UE may be the UE 235 shown in FIG. 2 and a right UE may be the UE 236 shown in FIG. 2. The scenario for the sidelink communications between the UEs 235 and 236 may be one of the sidelink communication scenarios A through D of Table 1. The user plane protocol stack of each of the UEs 235 and 236 may comprise a physical (PHY) layer, a medium access control (MAC) layer, a radio link control (RLC) layer, and a packet data convergence protocol (PDCP) layer.

The sidelink communications between the UEs 235 and 236 may be performed using a PC5 interface (e.g., PC5-U interface). A layer-2 identifier (ID) (e.g., a source layer-2 ID, a destination layer-2 ID) may be used for the sidelink communications, and the layer 2-ID may be an ID configured for the V2X communications (e.g., V2X service). Also, in the sidelink communications, a hybrid automatic repeat request (HARQ) feedback operation may be supported, and an RLC acknowledged mode (RLC AM) or an RLC unacknowledged mode (RLC UM) may be supported.

Meanwhile, a control plane protocol stack of the UEs (e.g., the UEs 235 and 236) performing sidelink communications may be configured as follows.

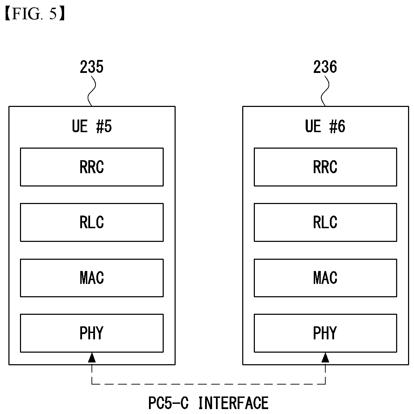

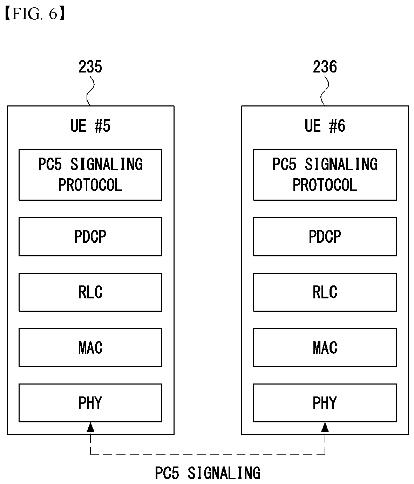

FIG. 5 is a block diagram illustrating a first exemplary embodiment of a control plane protocol stack of a UE performing sidelink communication, and FIG. 6 is a block diagram illustrating a second exemplary embodiment of a control plane protocol stack of a UE performing sidelink communication.

As shown in FIGS. 5 and 6, a left UE may be the UE 235 shown in FIG. 2 and a right UE may be the UE 236 shown in FIG. 2. The scenario for the sidelink communications between the UEs 235 and 236 may be one of the sidelink communication scenarios A through D of Table 1. The control plane protocol stack illustrated in FIG. 5 may be a control plane protocol stack for transmission and reception of broadcast information (e.g., Physical Sidelink Broadcast Channel (PSBCH)).

The control plane protocol stack shown in FIG. 5 may include a PHY layer, a MAC layer, an RLC layer, and a radio resource control (RRC) layer. The sidelink communications between the UEs 235 and 236 may be performed using a PC5 interface (e.g., PC5-C interface). The control plane protocol stack shown in FIG. 6 may be a control plane protocol stack for one-to-one sidelink communication. The control plane protocol stack shown in FIG. 6 may include a PHY layer, a MAC layer, an RLC layer, a PDCP layer, and a PC5 signaling protocol layer.

Meanwhile, channels used in the sidelink communications between the UEs 235 and 236 may include a Physical Sidelink Shared Channel (PSSCH), a Physical Sidelink Control Channel (PSCCH), a Physical Sidelink Discovery Channel (PSDCH), and a Physical Sidelink Broadcast Channel (PSBCH). The PSSCH may be used for transmitting and receiving sidelink data and may be configured in the UE (e.g., UE 235 or 236) by a higher layer signaling. The PSCCH may be used for transmitting and receiving sidelink control information (SCI) and may also be configured in the UE (e.g., UE 235 or 236) by a higher layer signaling.

The PSDCH may be used for a discovery procedure. For example, a discovery signal may be transmitted over the PSDCH. The PSBCH may be used for transmitting and receiving broadcast information (e.g., system information). Also, a demodulation reference signal (DM-RS), a synchronization signal, or the like may be used in the sidelink communications between the UEs 235 and 236. The synchronization signal may include a primary sidelink synchronization signal (PSSS) and a secondary sidelink synchronization signal (SSSS).

Meanwhile, a sidelink transmission mode (TM) may be classified into sidelink TMs 1 to 4 as shown below in Table 2.

**[Table 2]**

| **Sidelink TM** | **Description** |
|---|---|
| 1 | Transmission using resources scheduled by base station |
| 2 | UE autonomous transmission without scheduling of base station |
| 3 | Transmission using resources scheduled by base station in V2X communications |
| 4 | UE autonomous transmission without scheduling of base station in V2X communications |

When the sidelink TM 3 or 4 is supported, each of the UEs 235 and 236 may perform sidelink communications using a resource pool configured by the base station 210. The resource pool may be configured for each of the sidelink control information and the sidelink data.

The resource pool for the sidelink control information may be configured based on an RRC signaling procedure (e.g., a dedicated RRC signaling procedure, a broadcast RRC signaling procedure). The resource pool used for reception of the sidelink control information may be configured by a broadcast RRC signaling procedure. When the sidelink TM 3 is supported, the resource pool used for transmission of the sidelink control information may be configured by a dedicated RRC signaling procedure. In this case, the sidelink control information may be transmitted through resources scheduled by the base station 210 within the resource pool configured by the dedicated RRC signaling procedure. When the sidelink TM 4 is supported, the resource pool used for transmission of the sidelink control information may be configured by a dedicated RRC signaling procedure or a broadcast RRC signaling procedure. In this case, the sidelink control information may be transmitted through resources selected autonomously by the UE (e.g., UE 235 or 236) within the resource pool configured by the dedicated RRC signaling procedure or the broadcast RRC signaling procedure.

When the sidelink TM 3 is supported, the resource pool for transmitting and receiving sidelink data may not be configured. In this case, the sidelink data may be transmitted and received through resources scheduled by the base station 210. When the sidelink TM 4 is supported, the resource pool for transmitting and receiving sidelink data may be configured by a dedicated RRC signaling procedure or a broadcast RRC signaling procedure. In this case, the sidelink data may be transmitted and received through resources selected autonomously by the UE (e.g., UE 235 or 236) within the resource pool configured by the dedicated RRC signaling procedure or the broadcast RRC signaling procedure.

Hereinafter, sidelink communication methods will be described. Even when a method (e.g., transmission or reception of a signal) to be performed at a first communication node among communication nodes is described, a corresponding second communication node may perform a method (e.g., reception or transmission of the signal) corresponding to the method performed at the first communication node. That is, when an operation of a UE #1 (e.g., vehicle #1) is described, a UE #2 (e.g., vehicle #2) corresponding thereto may perform an operation corresponding to the operation of the UE #1. Conversely, when an operation of the UE #2 is described, the corresponding UE #1 may perform an operation corresponding to the operation of the UE #2. In exemplary embodiments described below, an operation of a vehicle may be an operation of a communication node located in the vehicle.

In exemplary embodiments, signaling may be one or a combination of two or more of higher layer signaling, MAC signaling, and physical (PHY) signaling. A message used for higher layer signaling may be referred to as a `higher layer message' or `higher layer signaling message'. A message used for MAC signaling may be referred to as a `MAC message' or `MAC signaling message'. A message used for PHY signaling may be referred to as a `PHY message' or `PHY signaling message'. The higher layer signaling may refer to an operation of transmitting and receiving system information (e.g., master information block (MIB), system information block (SIB)) and/or an RRC message. The MAC signaling may refer to an operation of transmitting and receiving a MAC control element (CE). The PHY signaling may refer to an operation of transmitting and receiving control information (e.g., downlink control information (DCI), uplink control information (UCI), or SCI).

A sidelink signal may be a synchronization signal and a reference signal used for sidelink communication. For example, the synchronization signal may be a synchronization signal/physical broadcast channel (SS/PBCH) block, sidelink synchronization signal (SLSS), primary sidelink synchronization signal (PSSS), secondary sidelink synchronization signal (SSSS), or the like. The reference signal may be a channel state information-reference signal (CSI-RS), DM-RS, phase tracking-reference signal (PT-RS), cell-specific reference signal (CRS), sounding reference signal (SRS), discovery reference signal (DRS), or the like.

A sidelink channel may be a PSSCH, PSCCH, PSDCH, PSBCH, physical sidelink feedback channel (PSFCH), or the like. In addition, a sidelink channel may refer to a sidelink channel including a sidelink signal mapped to specific resources in the corresponding sidelink channel. The sidelink communication may support a broadcast service, a multicast service, a groupcast service, and a unicast service.

The sidelink communication may be performed based on a single-SCI scheme or a multi-SCI scheme. When the single-SCI scheme is used, data transmission (e.g., sidelink data transmission, sidelink-shared channel (SL-SCH) transmission) may be performed based on one SCI (e.g., 1st-stage SCI). When the multi-SCI scheme is used, data transmission may be performed using two SCIs (e.g., 1st-stage SCI and 2nd-stage SCI). The SCI(s) may be transmitted on a PSCCH and/or a PSSCH. When the single-SCI scheme is used, the SCI (e.g., 1st-stage SCI) may be transmitted on a PSCCH. When the multi-SCI scheme is used, the 1st-stage SCI may be transmitted on a PSCCH, and the 2nd-stage SCI may be transmitted on the PSCCH or a PSSCH. The 1st-stage SCI may be referred to as `first-stage SCI', and the 2nd-stage SCI may be referred to as `second-stage SCI'. A format of the first-stage SCI may include a SCI format 1-A, and a format of the second-stage SCI may include a SCI format 2-A and a SCI format 2-B.

The 1st-stage SCI may include or more information elements among priority information, frequency resource assignment information, time resource assignment information, resource reservation period information, demodulation reference signal (DMRS) pattern information, 2nd-stage SCI format information, a beta_offset indicator, the number of DMRS ports, and modulation and coding scheme (MCS) information. The 2nd-stage SCI may include one or more information elements among a HARQ processor identifier (ID), a redundancy version (RV), a source ID, a destination ID, CSI request information, a zone ID, and communication range requirements.

In exemplary embodiments, `configuring an operation (e.g., DRX operation)' may refer to signaling of `configuration information (e.g., information elements, parameters) for the operation' and/or `information instructing to perform the operation'. `Configuring an information element (e.g., parameter)' may mean that the information element is signaled. The signaling may be at least one of system information (SI) signaling (e.g., transmission of a system information block (SIB) and/or master information block (MIB)), RRC signaling (e.g., transmission of an RRC parameter and/or higher layer parameter), MAC control element (CE) signaling, or PHY signaling (e.g., transmission of downlink control information (DCI), uplink control information (UCI), and/or sidelink control information (SCI)). Here, transmission of SCI may refer to transmission of 1st-stage SCI and/or 2nd-stage SCI.

In exemplary embodiments, a transmitting terminal may refer to a terminal transmitting SL data, and a receiving terminal may refer to a terminal receiving the SL data. The receiving terminal may support SL discontinuous reception (DRX). An operation mode of the receiving terminal supporting SL DRX may transition from a non-communication mode to a communication mode at a specific time, and the receiving terminal operating in the communication mode may perform a channel and/or signal reception operation. The non-communication mode may refer to a mode in which the receiving terminal does not perform communication (e.g., reception operation). For example, the non-communication mode may be an inactive mode, idle mode, or sleep mode. The communication mode may refer to a mode in which the receiving terminal performs communication (e.g., reception operation). For example, the communication mode may be a wake-up mode.

The receiving terminal may operate according to a DRX cycle. For example, the operation mode of the receiving terminal may be transitioned according to the DRX cycle. The DRX cycle may refer to an interval between times at which the operation mode of the receiving terminal transitions to the wake-up mode. A `longer DRX cycle' may mean a `longer time interval' at which the receiving terminal wakes up. When SL DRX is applied from the perspective of the transmitting terminal, the transmitting terminal may wake up for transmission according to the DRX cycle. For example, when there is SL data to be transmitted to the receiving terminal, the transmitting terminal may attempt to transmit the SL data in consideration of the DRX cycle. The receiving terminal may attempt to receive the SL data according to the DRX cycle.

### [Uu DRX cycle and SL DRX cycle setting method]

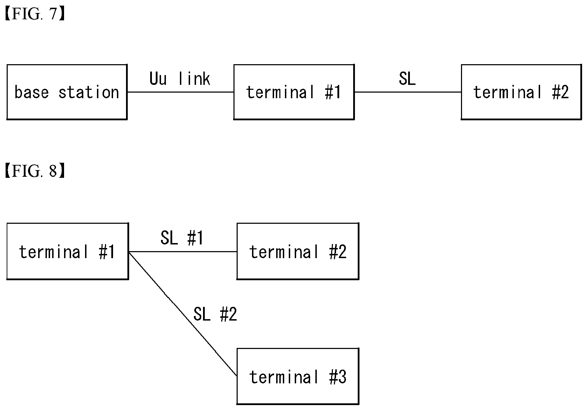

FIG. 7 is a conceptual diagram illustrating a first exemplary embodiment of a communication system including a Uu link and a SL.

As shown in FIG. 7, a communication system may include a base station, terminal #1, and terminal #2. A Uu link may be established between the base station and the terminal #1, and a SL may be established between the terminal #1 and the terminal #2. The terminal #1 may operate as a receiving terminal on the Uu link and may operate as a transmitting terminal on the SL. The terminal #2 may operate as a receiving terminal on the SL. Each of the terminal #1 and terminal #2 may be a terminal located in a vehicle (e.g., a vehicle (V)-UE).

The communication system may support a mode 1 (e.g., resource allocation (RA) mode 1). The mode 1 may be the sidelink TM #1 or #3 defined in Table 2. In this case, the base station may transmit configuration information for SL communication (hereinafter referred to as `SL configuration information') through the Uu link. The terminal #1 may perform a DRX operation on the Uu link. The DRX operation performed on the Uu link may be referred to as `Uu DRX operation'. The operation of transmitting the SL configuration information may be performed in consideration of the Uu DRX operation. That is, the operation of transmitting the SL configuration information may be restricted by the Uu DRX operation.

The terminal #2 may perform a DRX operation on the SL. The DRX operation performed on the SL may be referred to as `SL DRX operation'. When the Uu DRX operation and the SL DRX operation are performed independently, the number of times the terminal #1 wakes up for transmission/reception operations and/or the number of times the terminal #2 wakes up for reception operations may increase. Accordingly, power consumption in the terminal(s) may increase, and a delay may increase due to operations according to DRX cycles. Therefore, methods for interworking of the DRX operations on the Uu link and SL are needed. As shown in Table 3 below, a SL DRX cycle for the SL DRX operation may be set based on a Uu DRX cycle for the Uu DRX operation.

**[Table 3]**

| **Uu DRX cycle** | **SL DRX cycle** |
|---|---|
| Uu DRX cycle #1 | SL DRX cycle #1 |
| | SL DRX cycle #2 |
| Uu DRX cycle #2 | SL DRX cycle #3 |
| | SL DRX cycle #4 |
| Uu DRX cycle #3 | SL DRX cycle #5 |
| | SL DRX cycle #6 |

The base station may set (e.g., signal) one or more Uu DRX cycles to the terminal #1. One or more SL DRX cycles may be set to be associated with (e.g., mapped to) one Uu DRX cycle. For example, one Uu DRX cycle may be set to be associated with two SL DRX cycles. The base station may configure (e.g., signal) a mapping relationship between Uu DRX cycle(s) and SL DRX cycle(s) to the terminal(s).

The terminal #1 may receive information on the mapping relationship between Uu DRX cycle(s) and SL DRX cycle(s) from the base station. In addition, the terminal #1 may receive information indicating one Uu DRX cycle from the base station. When a Uu DRX cycle #2 is indicated by the base station, the terminal #1 may determine that a SL DRX cycle #3 and/or a SL DRX cycle #4 mapped to the Uu DRX cycle #2 are usable based on the mapping relationship. The terminal #1 may instruct (e.g., configure) the terminal #2 to use the SL DRX cycle #3 mapped to the Uu DRX cycle #2 indicated by the base station. In this case, the terminal #1 may perform a reception operation for the base station based on the Uu DRX cycle #2, and the terminal #2 may perform a reception operation for the terminal #1 based on the SL DRX cycle #3 mapped to the Uu DRX cycle #2. In addition, the terminal #1 may perform a transmission operation for the terminal #2 in consideration of the SL DRX cycle #3 mapped to the Uu DRX cycle #2.

The Uu DRX cycle and the SL DRX cycle may be set to have a temporal relationship with each other. For example, the Uu DRX cycle #1 may be a multiple of each of the SL DRX cycles #1 and #2. Alternatively, each of the SL DRX cycles #1 and #2 may be a multiple of the Uu DRX cycle #1. The multiple may be set in various manners, such as a multiple by 0.5, a multiple by 1, or a multiple by 2. The base station may set (e.g., signal) a multiple for the DRX cycle to the terminal #1 and/or terminal #2. In this case, multiples with respect to the Uu DRX cycle may be configured (e.g., signaled) to the terminal(s) instead of the information on the mapping relationship between Uu DRX cycle(s) and SL DRX cycle(s). Alternatively, the mapping relationship between Uu DRX cycle(s) and SL DRX cycle(s) may mean multiples with respect to the Uu DRX cycle. The multiple may be a rational number.

The terminal #1 (e.g., transmitting terminal) may set a multiple with respect to a DRX cycle (e.g., Uu DRX cycle) to the terminal #2 (e.g., receiving terminal). The same multiple or different multiples may be set with respect to each Uu DRX cycle. The same multiple or different multiples may be set for SL DRX cycles mapped to one Uu DRX cycle. For example, in the exemplary embodiment defined in Table 3, the SL DRX cycle #1 may be set as a multiple by 1 of the Uu DRX cycle #1, the SL DRX cycle #2 may be set as a multiple by 0.5 of the Uu DRX cycle #1, the SL DRX cycle #3 may be set as a multiple by 1 of the Uu DRX cycle #2, and the SL DRX cycle #4 may be set as a multiple by 2 of the Uu DRX cycle #2.

The base station may set (e.g., signal) the Uu DRX cycle #1 and multiples (e.g., a multiple by 0.5, a multiple by 1, etc.) with respect to the Uu DRX cycle #1 to the terminal #1. The terminal #1 may transmit information (e.g., indication bit(s)) indicating a multiple by 0.5 to the terminal #2 based on the information received from the base station. In this case, the terminal #1 may perform a reception operation for the base station based on the Uu DRX cycle #1, and the terminal #2 may perform a reception operation for the terminal #1 based on the SL DRX cycle #1, which is a multiple by 0.5 of the Uu DRX cycle. In addition, the terminal #1 may perform a transmission operation for the terminal #2 in consideration of the SL DRX cycle #1, which is a multiple by 0.5 of the Uu DRX cycle.

Alternatively, a value (e.g., indication bit(s)) indicating a multiple by which the SL DRX cycle(s) mapped to the Uu DRX cycle is set may be used. For example, as shown in Table 4 below, indication bit(s) indicating a multiple with respect to the Uu DRX cycle may be set. For example, the base station may configure (e.g., signal) the indication bits defined in Table 4 to the terminal #1 and/or the terminal #2. Together with or independently of the above-described configuration operation, the terminal #1 (e.g., transmitting terminal) may configure (e.g., signal) the indication bits defined in Table 4 to the terminal #2 (e.g., receiving terminal).

**[Table 4]**

| **Multiples for Uu DRX cycle** | **Indication bits** |
|---|---|
| Multiple by 0.25 | 00 |
| Multiple by 0.5 | 01 |
| Multiple by 1 | 10 |
| Multiple by 2 | 11 |

When the Uu DRX cycle is set and the indication bits (e.g., indication value) defined in Table 4 is signaled, the terminal(s) may identify the SL DRX cycle by applying the multiple according to the indication bits to the Uu DRX cycle. For example, when the indication bits are set to ` 10', the SL DRX cycle may be set equal to the Uu DRX cycle. Each of the Uu DRX cycle and the SL DRX cycle may be set in units of seconds, milliseconds, symbols, mini-slots, slots, or subframes.

Alternatively, as shown in Table 5 below, an offset for the SL DRX cycle may be set. The offset may be an interval between the Uu DRX cycle (e.g., a start time of the Uu DRX cycle) and the SL DRX cycle (e.g., a start time of the SL DRX cycle). The information on the mapping relationship between the Uu DRX cycle and the SL DRX cycle may include the offset.

**[Table 5]**

| **Offset for the SL DRX cycle** | **Offset value** |
|---|---|
| Offset #1 | 1 slot |
| Offset #2 | 2 slots |
| Offset #3 | 3 slots |

Each of the offsets may be set in units of seconds, milliseconds, symbols, mini-slots, slots, or subframes. The base station may configure (e.g., signal) an offset defined in Table 5 to the terminal #1 and/or the terminal #2. Together with or independently of the above configuration operation, the terminal #1 (e.g., transmitting terminal) may configure (e.g., signal) the offset defined in Table 5 to the terminal #2 (e.g., receiving terminal). The offset may be represented by indication bits having a size of 2 bits. The offset may be set to indicate zero slots.

When the offset #1 is set, the SL DRX cycle may start one slot after the start time of the Uu DRX cycle. In this case, the terminal #1 may perform a reception operation according to the Uu DRX cycle, and may perform a transmission operation in consideration of the SL DRX cycle starting one slot after the start time of the Uu DRX cycle. The terminal # 2 may perform a reception operation according to the SL DRX cycle starting one slot after the start time of the Uu DRX cycle.

The offsets defined in Table 5 may be applied not only to a case when the Uu DRX cycle and the SL DRX cycle are set identically but also to a case when the Uu DRX cycle and the SL DRX cycle are set differently. For example, when the SL DRX cycle is set based on the Uu DRX cycle according to the manner defined in Table 3 and/or Table 4, and the offsets defined in Table 5 are set, the start time of the SL DRX cycle may be changed according to the offset. When the offset #1 is set, the start time of the SL DRX cycle may be one slot after the start time of the Uu DRX cycle. The offset may be used for the terminal #1 to generate SL-related information based on information received from the base station and transmit the SL-related information through the sidelink.

As shown in Table 6 below, DRX cycle candidates (e.g., DRX cycles #1 to #4) may be preset, and one of the DRX cycle candidates may be used as a SL DRX cycle. Alternatively, one of the DRX cycle candidates may be used as a Uu DRX cycle, and a SL DRX cycle equal to the one Uu DRX cycle may be used. Alternatively, the SL DRX cycle may be determined by applying the above-described mapping relationship to one DRX cycle candidate selected from among the DRX cycle candidates. The DRX cycle candidate may mean a usable DRX cycle.

**[Table 6]**

| **DRX cycle candidate(s)** | **Indication bits** |
|---|---|
| DRX cycle #1 | 00 |
| DRX cycle #2 | 01 |
| DRX cycle #3 | 10 |
| DRX cycle #4 | 11 |

One SL DRX cycle or one Uu DRX cycle may be indicated by indication bits (e.g., indication value) defined in Table 6. The base station may signal indication bits indicating one SL DRX cycle or one Uu DRX cycle from among the DRX cycle candidates to the terminal #1 and/or terminal #2. Together with or independently of the above configuration operation, the terminal #1 (e.g., transmitting terminal) may transmit indication bits indicating the one SL DRX cycle or one Uu DRX cycle among the DRX cycle candidates to the terminal #2 (e.g., receiving terminal). The indication bits defined in Table 6 may be signaled together with the above-described mapping relationship (e.g., multiples, offsets). In this case, the SL DRX cycle may be determined by applying the mapping relationship to the DRX cycle candidate indicated by the indication bits. For example, the indication bits defined in Table 6 may be signaled together with the offset information defined in Table 5. In this case, the SL DRX cycle indicated according to the definition of Table 6 may start after the offset from the start time of the Uu DRX cycle. Exemplary embodiment(s) according to extensions, combinations, and/or variations of the above-described exemplary embodiments of Tables 4 to 6 may be used.

### [Method for setting a DRX cycle for broadcast, group cast, and/or unicast]

FIG. 8 is a conceptual diagram illustrating a first exemplary embodiment of a communication system including a plurality of SLs.

As shown in FIG. 8, a communication system may include a terminal #1, terminal #2, and terminal #3. A SL #1 may be established between the terminal #1 and terminal #2, and a SL #2 may be established between the terminal #1 and terminal #3. The terminal #1 may operate as a transmitting terminal, and the terminal #2 and terminal #3 may each operate as receiving terminals. Each of the terminal #1, terminal #2, and terminal #3 may be a terminal (e.g., V-UE) located in a vehicle.

A DRX operation on the SL #1 may be referred to as a SL DRX operation #1, and a DRX operation on the SL #2 may be referred to as a SL DRX operation #2. A SL DRX cycle #1 for the SL DRX operation #1 may be set identically to a SL DRX cycle #2 for the SL DRX operation #2. Alternatively, the SL DRX cycle #1 for the SL DRX operation #1 may be set differently from the SL DRX cycle #2 for the SL DRX operation #2.

In a communication environment where a plurality of SL DRXs operate, the terminal #1, which desires to perform broadcast transmission, may configure a plurality of SL DRXs so that the terminal #2 and terminal #3 perform reception operations at the same time. If the SL DRX cycles for the terminals (e.g., terminals #2 and #3) provided with a broadcast service are the same, the terminal #1 may be able to perform broadcast transmission according to the current SL DRX cycle without additional configuration for the broadcast service. The terminals #2 and #3 may attempt to receive broadcast channels and/or signals at the same time according to the SL DRX cycle.

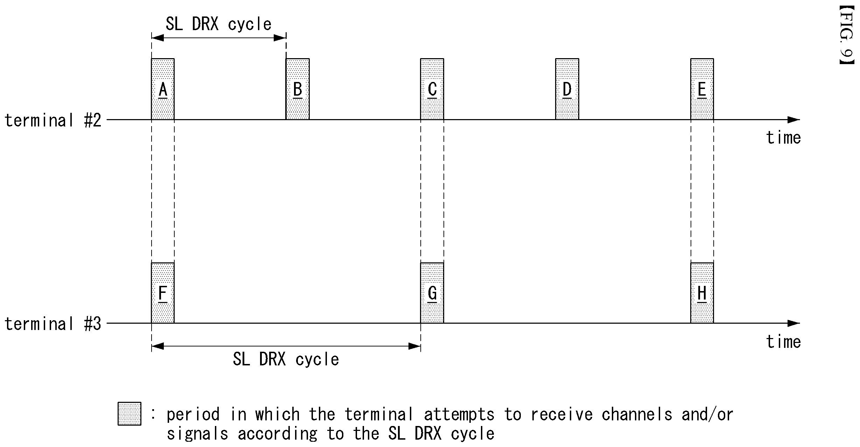

FIG. 9 is a timing diagram illustrating operations of terminals according to different SL DRX cycles.

As shown in FIG. 9, a SL DRX cycle of the terminal #2 may be different from a SL DRX cycle of the terminal #3. For example, the SL DRX cycle of the terminal #2 may be shorter than the SL DRX cycle of the terminal #3. The terminal #2 may attempt to receive channels and/or signals in periods A, B, C, D, and E according to the SL DRX cycle, and the terminal #3 may attempt to receive channels and/or signals in periods F, G, and H according to the SL DRX cycle. In the time domain, the period A may be equal to the period F, the period C may be equal to the period G, and the period E may be equal to the period H. In this case, the terminal #1 may perform broadcast communication in an overlapping period (hereinafter, `common period') between the terminal #2 and terminal #3. The common period may be a period corresponding to a common multiple (e.g., least common multiple) between the SL DRX cycle of the terminal #2 and the SL DRX cycle of the terminal #3.

The terminal #1 may identify the common period by considering the SL DRX cycle of the terminal #2 and the SL DRX cycle of the terminal #3, determine a common DRX cycle for the common period, and set (e.g., signal) the common DRX cycle to the terminals #2 and #3. The terminal #1 may perform broadcast communication (e.g., broadcast service) for the terminals #2 and #3 in consideration of the common DRX cycle, and the terminals #2 and #3 may each perform reception operations for broadcast channels and/or signals based on the common DRX cycle.

The common DRX cycle and/or a UE-specific DRX cycle may be set to support broadcast communication. The common DRX cycle may be set as shown in Table 7 below.

**[Table 7]**

| **Common DRX cycles** | **Indication bit** |
|---|---|
| Common DRX cycle #1 | 0 |
| Common DRX cycle #2 | 1 |

According to the definition of Table 7, a common DRX cycle for one transmitting terminal (e.g., terminal #1) may be set. The common DRX cycle may be applied to all receiving terminals (e.g., terminals #2 and #3) performing broadcast communication with the one transmitting terminal. The base station may set (e.g., signal) the common DRX cycle to the terminal(s). Together with or independently of the above configuration operation, the transmitting terminal (e.g., terminal #1) may set (e.g., signal) the common DRX cycle to the receiving terminals (e.g., terminals #2 and #3). For example, when the indication bit set to 0 according to Table 7 is signaled, the receiving terminals may operate based on a common DRX cycle #1.

The common DRX cycle may be set differently for each transmitting terminal. The common DRX cycle may be set cell-specifically. In this case, terminals belonging to the same cell may use the same common DRX cycle. The common DRX cycle may be set resource pool (RP)-specifically. In this case, terminals operating in the same RP may use the same common DRX cycle.

When the common DRX cycle is set cell-specifically or RP-specifically, one common DRX cycle may be used within one cell or one RP. Alternatively, when the common DRX cycle is set cell-specifically or RP-specifically, a plurality of common DRX cycle candidates may be configured within one cell or one RP, and one among the plurality of common DRX cycle candidates may be selected for a particular transmitting terminal. That is, the common DRX cycle may be selected for each transmitting terminal.

The common DRX cycle may be set according to exemplary embodiment(s) according to extension, variation, and/or combination of the cell-specific scheme, RP-specific scheme, and/or UE-specific scheme. When the common DRX cycle is set, the transmitting terminal may perform broadcast transmission based on the common DRX cycle, and the receiving terminals may perform channel and/or signal reception operations based on the common DRX cycle. The broadcast transmission may refer to a transmission service for all unspecified receiving terminals or a transmission service for all receiving terminals performing SL communication with one transmitting terminal.

Meanwhile, a UE-specific DRX cycle may be set as shown in Table 8 below.

**[Table 8]**

| **UE-specific DRX cycles** | **Indication bit** |
|---|---|
| UE-specific DRX cycle #1 | 0 |
| US-specific DRX cycle #2 | 1 |

In a state where a common DRX cycle for broadcast communication (e.g., common DRX cycle defined in Table 7) is set, a UE-specific DRX cycle may be set additionally for a DRX operation of each terminal (e.g., each receiving terminal). The base station may set (e.g., signal) a UE-specific DRX cycle to the terminal(s). Together with or independently of the above configuration operation, the transmitting terminal (e.g., terminal #1) may set (e.g., signal) the UE-specific DRX cycles to the receiving terminals (e.g., terminals #2 and #3).

A start time of a UE-specific DRX cycle may be determined based on a start time of the common DRX cycle and an offset (e.g., offset defined in Table 5). For example, the common DRX cycle, UE-specific DRX cycles, and offsets for the terminals #2 and #3 shown in FIG. 8 may be set as shown in Table 9 below. The base station may set (e.g., signal) the common DRX cycle, UE-specific DRX cycles, and/or offsets to the terminal(s). Together with or independently of the above configuration operation, the transmitting terminal (e.g., terminal #1) may set (e.g., signal) the common DRX cycle, UE-specific DRX cycles, and/or offsets to the receiving terminals (e.g., terminals #2 and #3).

**[Table 9]**

| | **Common DRX cycle** | **UE-specific DRX cycles** | **Offsets** |
|---|---|---|---|
| Terminal #2 | Common DRX cycle #1 defined in Table 7 | UE-specific DRX cycle #1 defined in Table 8 | Offset #1 (1 slot) defined in Table 5 |
| Terminal #3 | | UE-specific DRX cycle #2 defined in Table 8 | Offset #2 (2 slots) defined in Table 5 |

According to the configuration in Table 9, the terminal #2 may perform a reception operation based on the UE-specific DRX cycle #1 one slot after the start time of the common DRX cycle #1, and the terminal #3 may perform a reception operation based on the UE-specific DRX cycle #2 after two slots from the start time of the common DRX cycle #1. Here, the reception operation based on the UE-specific DRX cycle in each of the terminals #2 and #3 may be a reception operation of a unicast channel and/or signal on the SL or a reception operation of a groupcast channel and/or signal on the SL.

In the exemplary embodiment shown in FIG. 8, when the terminal #1 performs unicast communication with the terminals #2 and #3, respectively, different UE-specific DRX cycles may be set for the terminals #2 and #3, respectively. When the terminal #1 performs groupcast communication with the terminals #2 and #3, the same UE-specific DRX cycle may be set for the terminals #2 and #3. The SL DRX cycle may be set for each cast type (e.g., broadcast, group cast, unicast).

As shown in Table 10 below, a UE-specific DRX cycle based on a fixed time offset may be configured. A mapping relationship between time offset(s) and UE-specific DRX cycle(s) may be established.

**[Table 10]**

| **Time offset** | **UE-specific DRX cycles** | **Indication bits** |
|---|---|---|
| Time offset # 1 | UE-specific DRX cycle #1 | 00 |
| | UE-specific DRX cycle #2 | 01 |
| Time offset #2 | UE-specific DRX cycle #3 | 10 |
| | UE-specific DRX cycle #4 | 11 |

The base station may configure (e.g., signal) a time offset, a UE-specific DRX cycle, and/or a mapping relationship between the time offset and the UE-specific DRX cycle to the terminal(s). Together with or independently of the above-described configuration operation, the transmitting terminal (e.g., terminal #1) may configure (e.g., signal) the UE-specific DRX cycle and/or the mapping relationship between the time offset and the UE-specific DRX cycle to the receiving terminals (e.g., terminals #2 and #3).

According to the configuration of Table 10, when indication bits set to `00' are signaled to the terminal #2, the terminal #2 may attempt reception according to the UE-specific DRX cycle #1 after the time offset #1 from the start time of the common DRX cycle. According to the configuration in Table 10, when indication bits set to '01' are signaled to the terminal #3, the terminal #3 may attempt reception according to the UE-specific DRX cycle #2 after the time offset #1 from the start time of the common DRX cycle.

Alternatively, the start times of the UE-specific DRX cycles #1 and #2 may be determined based on the offsets defined in Table 5. In this case, the time offset defined in Table 10 may be used as a processing time for reception and processing of the broadcast service or DRX information.

Multiples with respect to the common DRX cycle may be set. For example, the UE-specific DRX cycle #1 for the terminal #2 may be set as a multiple by 1 of the common DRX cycle, and the UE-specific DRX cycle #2 for the terminal #3 may be set as a multiple by 2 of the common DRX cycle. The base station may set (e.g., signal) multiple(s) with respect to the common DRX cycle to the terminal(s). Together with or independently of the above-described configuration operation, the transmitting terminal (e.g., terminal #1) may set (e.g., signal) the multiple(s) with respect to the common DRX cycle to the receiving terminals (e.g., terminals #2 and #3).

In this case, the terminal #2 may perform a reception operation based on the UE-specific DRX cycle #1 after the time offset #1 from the start time of the common DRX cycle. The terminal #3 may perform a reception operation based on the UE-specific DRX cycle #2 after the time offset #1 from a start time of a common DRX cycle #2n or common DRX cycle #2n+1. Here, n may be an integer.

In the exemplary embodiment shown in FIG. 8, when the terminal #1 performs unicast communication with each of the terminals #2 and #3, different time offsets and different UE-specific DRX cycles for the terminals #2 and #3 may be set. When the terminal #1 performs groupcast communication with the terminals #2 and #3, the same time offset and the same UE-specific DRX cycle may be set for the terminals #2 and #3. Based on the above scheme, a cast type (CT)-specific DRX cycle may be operated.

In addition to the manner in which the UE-specific DRX cycle is associated with the common DRX cycle as in the exemplary embodiments shown in Tables 8 and 10, the UE-specific DRX cycle may be set according to the settings in Table 8, and the UE-specific DRX cycle may be operated independently of the common DRX cycle.

In the above-described exemplary embodiments, each of the common DRX cycle, UE-specific DRX cycle, and time offset may be set as one or more values. The SL DRX may operate according to extensions, modifications, and/or combinations of the above-described exemplary embodiments.

On the other hand, in a method different from the method shown in FIG. 9, a period corresponding to a common multiple (e.g., least common multiple) of the SL DRX cycle of the terminal #2 and the SL DRX cycle of the terminal #3 may be configured as a period for broadcast communication (hereinafter, `broadcast period'). A broadcast (B)-SL DRX cycle according to the broadcast period may be set. The base station may set (e.g., signal) the B-SL DRX cycle to the terminals. Together with or independently of the above configuration operation, the transmitting terminal (e.g., terminal #1) may set (e.g., signal) the B-SL DRX cycle to the receiving terminals (e.g., terminals #2 and #3).

For example, when the SL DRX cycle of the terminal #2 is 20 ms and the SL DRX cycle of the terminal #3 is 40 ms, the B-SL DRX cycle may be 40 ms. Alternatively, the B-SL DRX cycle may be set to a common multiple of the SL DRX cycle of the terminal #2 and the SL DRX cycle of the terminal #3. In this case, the B-SL DRX cycle may be indicated as a multiple of the least common multiple of the SL DRX cycle of the terminal #2 and the SL DRX cycle of the terminal #3.

**[Table 11]**

| **Multiple for B-SL DRX cycle** | **Indication bit** |
|---|---|
| Multiple by 1 | 0 |
| Multiple by 2 | 1 |

In the exemplary embodiment of Table 11, when the indication bit is set to 0, the B-SL DRX cycle may be set to a multiple by 1 of the least common multiple of the SL DRX cycles. When the least common multiple of the SL DRX cycles is 40 ms, the B-SL DRX cycle may be 40 ms. In the exemplary embodiment of Table 11, when the indication bit is set to 1, the B-SL DRX cycle may be set to a multiple by 2 of the least common multiple of the SL DRX cycles. When the least common multiple of the SL DRX cycles is 40 ms, the B-SL DRX cycle may be 80 ms. The base station may set (e.g., signal) the indication bit defined in Table 11 to the terminals. Together with or independently of the above-described configuration operation, the transmitting terminal (e.g., terminal #1) may set (e.g., signal) the indication bit defined in Table 11 to the receiving terminals (e.g., terminals #2 and #3).

For a SL DRX operation for broadcast communication, the transmitting terminal (e.g., terminal #1) may set (e.g., signal) the minimum value of the B-SL DRX cycle to the receiving terminals (e.g., terminals #2 and #3). Together with or independently of the above-described configuration operation, the base station may set (e.g., signal) the minimum value of the B-SL DRX cycle to the terminal(s). The minimum value of the B-SL DRX cycle may be included in initial DRX configuration information, and the transmitting terminal may signal the initial DRX configuration information to the receiving terminal. Alternatively, the base station may signal the initial DRX configuration information to the terminal(s). In this case, the terminals may perform broadcast communication according to the minimum value of the B-SL DRX cycle. During SL communication, the B-SL DRX cycle may change. The B-SL DRX cycle may be set to a specific value other than the minimum value.

The transmitting terminal (e.g., terminal #1) may determine the B-SL DRX cycle in consideration of the SL DRX cycles of the receiving terminals (e.g., terminals #2 and #3), and may set (e.g., signal or indicate) the B-SL DRX cycle to the receiving terminals. A plurality of B-SL DRX cycle candidates may be preset in the receiving terminals, and the transmitting terminal may set (e.g., signal) indication bit(s) indicating one of the plurality of B-SL DRX cycle candidates to the receiving terminals.

The B-SL DRX cycle may operate differently depending on the cast type. The B-SL DRX cycles may be set as shown in Table 12 below. A different B-SL DRX cycle may be used for each cast type. The same B-SL DRX cycle may be used for each cast type.

**[Table 12]**

| **B-SL DRX cycles** | **Indication bits** |
|---|---|
| B-SL DRX cycle #1 | 00 |
| B-SL DRX cycle #2 | 01 |
| B-SL DRX cycle #3 | 10 |
| B-SL DRX cycle #4 | 11 |

The B-SL DRX cycle may be set to be associated with (e.g., mapped to) the Uu DRX cycle. The SL DRX cycle for each of unicast, groupcast, and broadcast may be independently set. That is, a different SL DRX cycle may be used for each cast type. Alternatively, one SL DRX cycle for unicast and groupcast may be set, and one SL DRX cycle for broadcast may be set. Alternatively, an independent SL DRX cycle for a different combination of cast types may be set. The base station may set (e.g., signal) a SL DRX cycle for each cast type to the terminals. Together with or independently of the above-described setting operation, the transmitting terminal (e.g., terminal #1) may set (e.g., signal) the SL DRX cycle for each cast type to the receiving terminals (e.g., terminals #2 and #3).

In initial SL communication, the terminal(s) may use a short SL DRX cycle. Thereafter, when a specific triggering condition is satisfied or when a preset time elapses, the terminal(s) may use a long SL DRX cycle. In this case, power consumption in the terminal(s) may be reduced.

The exemplary embodiments of the present disclosure may be implemented as program instructions executable by a variety of computers and recorded on a computer readable medium. The computer readable medium may include a program instruction, a data file, a data structure, or a combination thereof. The program instructions recorded on the computer readable medium may be designed and configured specifically for the present disclosure or can be publicly known and available to those who are skilled in the field of computer software.

Examples of the computer readable medium may include a hardware device such as ROM, RAM, and flash memory, which are specifically configured to store and execute the program instructions. Examples of the program instructions include machine codes made by, for example, a compiler, as well as high-level language codes executable by a computer, using an interpreter. The above exemplary hardware device can be configured to operate as at least one software module in order to perform the embodiments of the present disclosure, and vice versa.

While the exemplary embodiments of the present disclosure and their advantages have been described in detail, it should be understood that various changes, substitutions and alterations may be made herein without departing from the scope of the present disclosure.

## Claims

1. An operation method of a transmitting terminal in a communication system, the operation method comprising:
receiving, from a base station, information indicating a Uu discontinuous reception (DRX) cycle;
receiving, from the base station, information on a mapping relationship between the Uu DRX cycle and one or more sidelink (SL) DRX cycles;
transmitting, to a first receiving terminal, first indication information based on the information on the mapping relationship;
performing a reception operation for the base station based on the Uu DRX cycle; and
performing a first SL communication with the first receiving terminal in consideration of a first SL DRX cycle determined by the Uu DRX cycle and the first indication information,
wherein the Uu DRX cycle is a DRX cycle set for a Uu link between the base station and the transmitting terminal, and the first SL DRX cycle is a DRX cycle set for a SL between the transmitting terminal and the first receiving terminal.

2. The operation method according to claim 1, wherein the information on the mapping relationship includes information of the first SL DRX cycle and a second SL DRX cycle which are mapped to the Uu DRX cycle, and the first indication information indicates the first SL DRX cycle.

3. The operation method according to claim 1, wherein the information on the mapping relationship includes a first multiple and a second multiple with respect to the Uu DRX cycle, the first indication information indicates the first multiple, the first SL DRX cycle is determined by applying the first multiple to the Uu DRX cycle, and each of the first multiple and the second multiple is a rational number.

4. The operation method according to claim 1, wherein the information on the mapping relationship includes a first offset and a second offset with respect to the Uu DRX cycle, the first indication information indicates the first offset, and a start time of the first SL DRX cycle is determined as a time after the first offset from a start time of the Uu DRX cycle.

5. The operation method according to claim 1, further comprising:
transmitting, to a second receiving terminal, second indication information based on the information on the mapping relationship; and
performing a second SL communication with the second receiving terminal in consideration of a second SL DRX cycle determined based on the Uu DRX cycle and the second indication information,
wherein the second SL DRX cycle is set independently of the first SL DRX cycle.

6. The operation method according to claim 1, further comprising: receiving, from the base station, information of Uu DRX cycle candidates, wherein the Uu DRX cycle is one of the Uu DRX cycle candidates.

7. An operation method of a receiving terminal in a communication system, the operation method comprising:
receiving information indicating a Uu discontinuous reception (DRX) cycle;
receiving, from a transmitting terminal, information on a mapping relationship between the Uu DRX cycle and a sidelink (SL) DRX cycle;
identifying the SL DRX cycle based on the Uu DRX cycle and the information on the mapping relationship; and
performing a reception operation for the receiving terminal based on the SL DRX cycle,
wherein the Uu DRX cycle is a DRX cycle set for a Uu link between a base station and the transmitting terminal, and the SL DRX cycle is a DRX cycle set for a SL between the transmitting terminal and the receiving terminal.

8. The operation method according to claim 7, wherein the information on the mapping relationship includes information of the SL DRX cycle mapped to the Uu DRX cycle.

9. The operation method according to claim 7, wherein the information on the mapping relationship includes a multiple with respect to the Uu DRX cycle, the SL DRX cycle is determined by applying the multiple to the Uu DRX cycle, and the multiple is a rational number.

10. The operation method according to claim 7, wherein the information on the mapping relationship includes an offset with respect to the Uu DRX cycle, and a start time of the SL DRX cycle is determined as a time after the offset from a start time of the Uu DRX cycle.

11. The operation method according to claim 7, further comprising: receiving, from the base station, information of Uu DRX cycle candidates, wherein the Uu DRX cycle is one of the Uu DRX cycle candidates.

12. An operation method of a transmitting terminal in a communication system, the operation method comprising:
determining a common discontinuous reception (DRX) cycle for broadcast communication;
transmitting configuration information of the common DRX cycle to a first receiving terminal and a second receiving terminal; and
performing the broadcast communication with the first receiving terminal and the second receiving terminal on a sidelink (SL) in consideration of the common DRX cycle.

13. The operation method according to claim 12, further comprising:
transmitting, to the first receiving terminal, first indication information indicating a first user equipment (UE)-specific DRX cycle for the first receiving terminal; and
transmitting, to the second receiving terminal, second indication information indicating a second UE-specific DRX cycle for the second receiving terminal.

14. The operation method according to claim 13, wherein the first indication information is a first multiple with respect to the common DRX cycle, the first UE-specific DRX cycle is determined by applying the first multiple to the common DRX cycle, the second indication information is a second multiple with respect to the common DRX cycle, the second UE-specific DRX cycle is determined by applying the second multiple to the common DRX cycle, and each of the first multiple and the second multiple is a rational number.

15. The operation method according to claim 13, wherein the first indication information is a first offset with respect to the common DRX cycle, a start time of the first UE-specific DRX cycle is determined as a time after the first offset from a start time of the common DRX cycle, the second indication information is a second offset with respect to the common DRX cycle, and a start time of the second UE-specific DRX cycle is determined as a time after the second offset from the start time of the common DRX cycle.

16. The operation method according to claim 13, wherein when the first UE-specific DRX cycle and the second UE-specific DRX cycle are set for unicast communication, the first UE-specific DRX cycle and the second UE-specific DRX cycle are set differently from each other, and when the first UE-specific DRX cycle and the second UE-specific DRX cycle are set for groupcast communication, the first UE-specific DRX cycle and the second UE-specific DRX cycle are set identically to each other.

17. The operation method according to claim 12, wherein the common DRX cycle is set cell-specifically, resource pool (RP)-specifically, or cast type (CT)-specifically.

18. The operation method according to claim 12, wherein the common DRX cycle is determined as a common multiple between the first SL DRX cycle of the first receiving terminal and the second SL DRX cycle of the second receiving terminal.
